(19) Europäisches Patentamt
European Patent Office
Office européen des brevets

(11) **EP 4 704 330 A1**

(12) **EUROPEAN PATENT APPLICATION**
published in accordance with Art. 153(4) EPC

(43) Date of publication:
**04.03.2026 Bulletin 2026/10**

(21) Application number: **23935432.7**

(22) Date of filing: **04.10.2023**

(51) International Patent Classification (IPC):
***H02P 21/12*** *(2016.01)*

(52) Cooperative Patent Classification (CPC):
**H02P 21/12**

(86) International application number:
**PCT/JP2023/036163**

(87) International publication number:
**WO 2024/224659 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2023 JP 2023072275**

(71) Applicant: **Hitachi Industrial Equipment Systems Co., Ltd.**
**Tokyo 101-0021 (JP)**

(72) Inventors:
• **TOBARI, Kazuaki**
  **Tokyo 100-8280 (JP)**
• **MATSUBARA, Mitsuru**
  **Tokyo 100-8280 (JP)**
• **TAKANO, Yuuri**
  **Tokyo 101-0021 (JP)**
• **UEI, Yusuke**
  **Tokyo 101-0021 (JP)**
• **KONDO, Terutomo**
  **Tokyo 101-0021 (JP)**

(74) Representative: **MERH-IP Matias Erny Reichl Hoffmann**
**Patentanwälte PartG mbB**
**Paul-Heyse-Straße 29**
**80336 München (DE)**

(54) **POWER CONVERSION DEVICE**

(57)     Provided is a power converter in which both power and a current are restricted to realize highly stable control characteristics. A power conversion device 100 includes a permanent magnet motor 1, a power converter 2 that supplies power to the permanent magnet motor 1, and a speed command correction computation unit 11, 11a, 11b, 11c, or 11d that corrects a speed command value $\omega_r^*$ in accordance with speed information $\omega_{rc}$, a torque command value $\tau^*$, and a primary current ic. The speed command correction computation unit 11, 11a, 11b, 11c, or 11d computes a limit value of the power to limit a current value of the permanent magnet motor 1 to a predetermined limit value $i_{max}^*$ or less if load torque that is larger than a torque value of the permanent magnet motor 1 which varies depending on a direct current voltage of the power converter 2 is applied, and corrects the speed command value $\omega_r^*$ in such a way that the power does not increase to the limit value of the power.

[FIG. 1]

EP 4 704 330 A1

**Description**

Technical Field

The present invention relates to a power conversion device.

Background Art

Patent Document 1 describes a control technique for realizing stable operation in a constant output area of a field weakening region.
Patent Document 1 describes means for computing motor output power and a technique for correcting a speed command value so as to adjust the output power to a predetermined value or less. The technique is for avoiding generation of overcurrent in a case where load torque that is larger than a torque value of a permanent magnet synchronous motor is applied in a constant output area of a field weakening region.

Prior Art Document

Patent Document

Patent Document 1: JP-2006-191721-A

Summary of the Invention

Problem to be Solved by the Invention

An object of Patent Document 1 is to correct a speed command value. Patent Document 1 does not describe a method of limiting a d-axis (magnetic flux axis) current command value which is computed in a field weakening region, or a q-axis (torque axis) output current which is computed in speed control.
In the technique described in Patent Document 1, a speed control input is restricted in such a way that the power does not exceed a limit value, but there is a possibility that a primary current becomes excessive if large load torque is applied in a constant output area of a field weakening region. The excessive primary current causes a possibility that operation cannot be continued.
An object of the present invention is to provide a power conversion device in which both power and a current are restricted to realize highly stable control characteristics.

Means for Solving the Problem

In order to achieve the above object, the configuration of the present invention is as follows.
A power conversion device includes a permanent magnet motor, a power converter that supplies power to the permanent magnet motor, and a speed command correction computation unit that corrects a speed command value in accordance with speed information, a torque command value, and a primary current, in which the speed command correction computation unit computes a limit value of the power to limit a current value of the permanent magnet motor to a predetermined limit value or less and corrects the speed command value in such a way that the power does not increase to the limit value of the power, if load torque that is larger than a torque value of the permanent magnet motor which varies depending on a direct current voltage of the power converter is applied.

Advantages of the Invention

The present invention can provide a power conversion device in which both power and a current are restricted to realize highly stable control characteristics.
That is, the present invention can provide a power conversion device capable of performing stable operation without generation of overcurrent in a case where load torque that is larger than a torque value of a permanent magnet motor which varies depending on the direct current voltage of a power converter is applied in a constant output area of a field weakening region.

Brief Description of the Drawings

[Fig. 1]

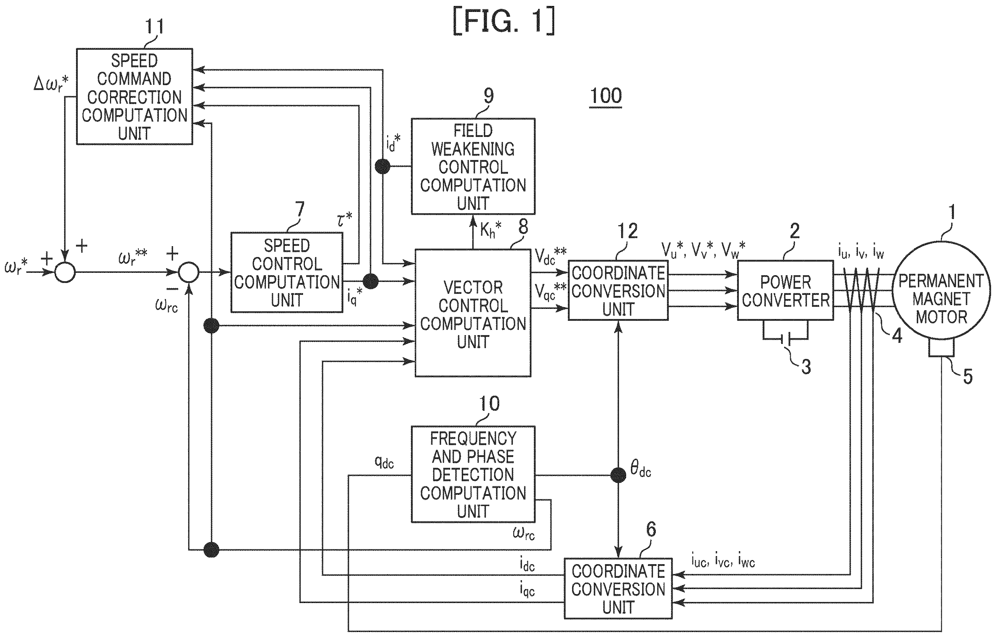

Fig. 1 is a schematic configuration diagram of a power conversion device according to a first embodiment.
[Fig. 2]

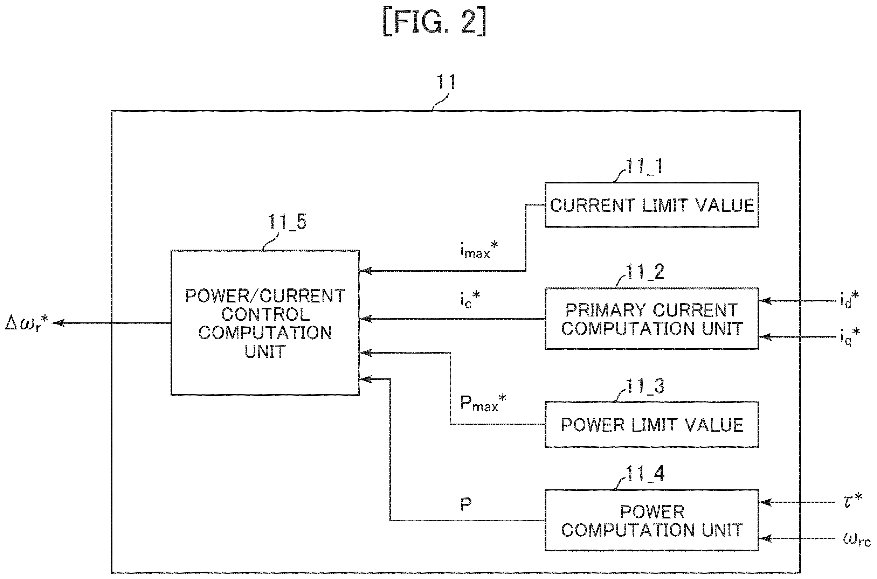

Fig. 2 is a configuration diagram of a speed command correction computation unit according to the first embodiment.
[Fig. 3]

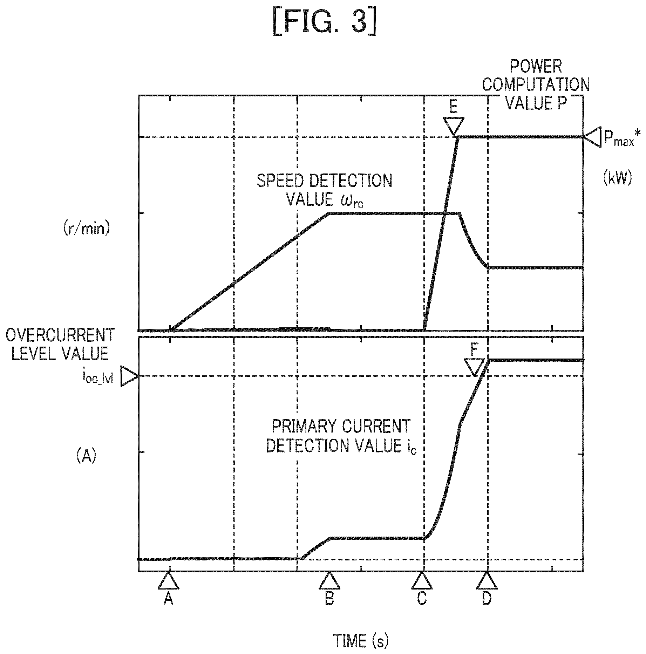

Fig. 3 is a diagram depicting control characteristics when the first embodiment is not adopted.
[Fig. 4]

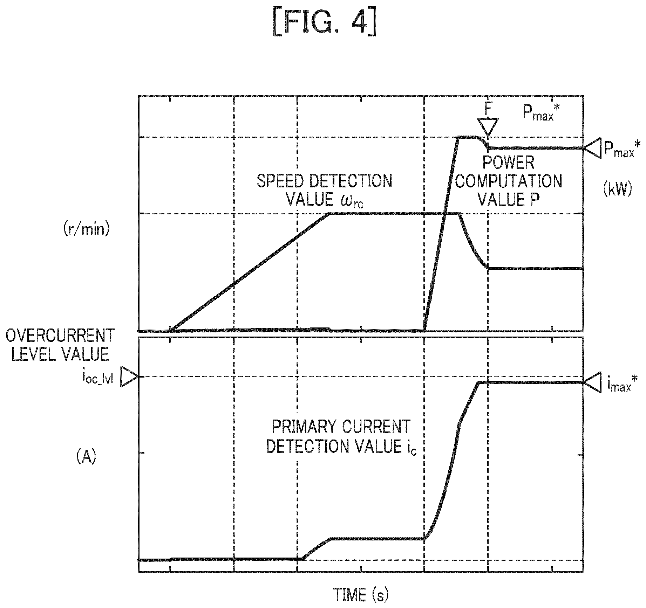

Fig. 4 is a diagram depicting control characteristics when the first embodiment is adopted.
[Fig. 5]

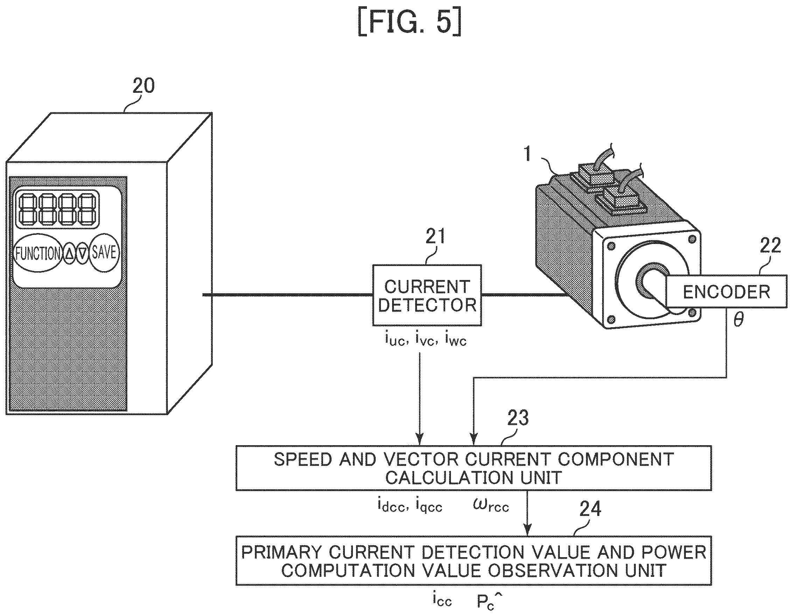

Fig. 5 is a diagram for explaining a verification method when the first embodiment is adopted.
[Fig. 6]

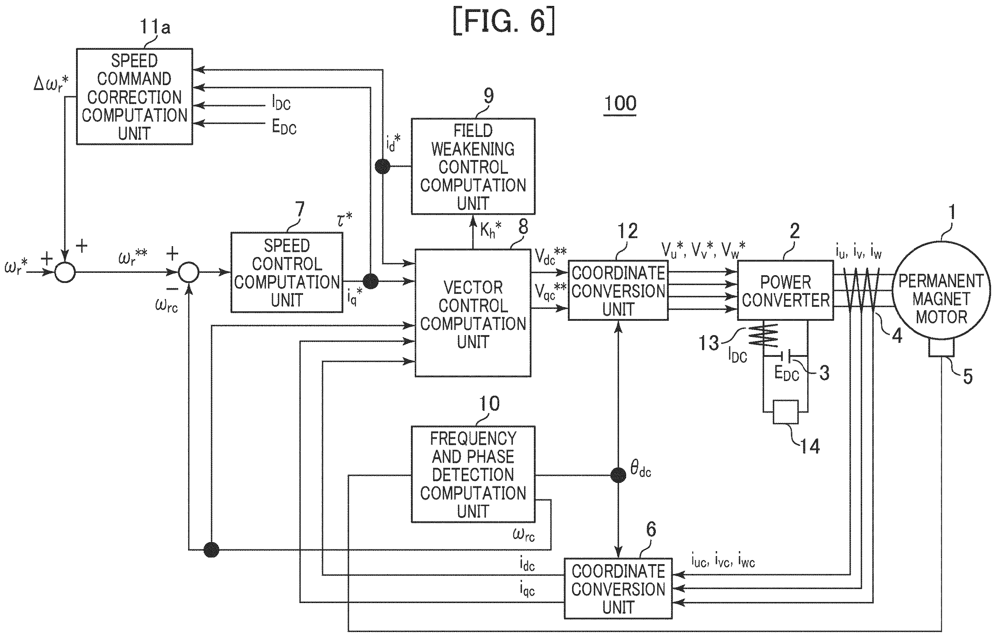

Fig. 6 is a schematic configuration diagram of the power conversion device according to a second embodiment.
[Fig. 7]

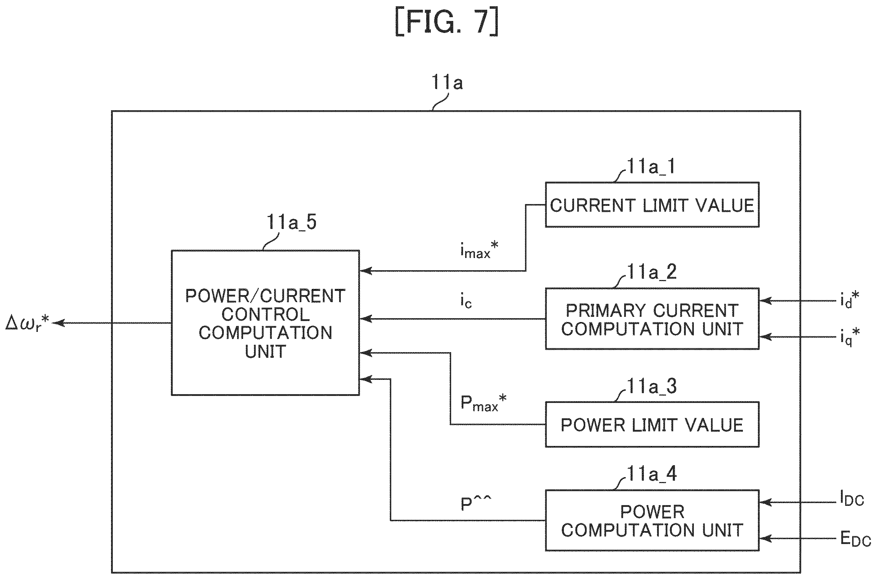

Fig. 7 is a configuration diagram of a speed command correction computation unit according to the second embodiment.
[Fig. 8]

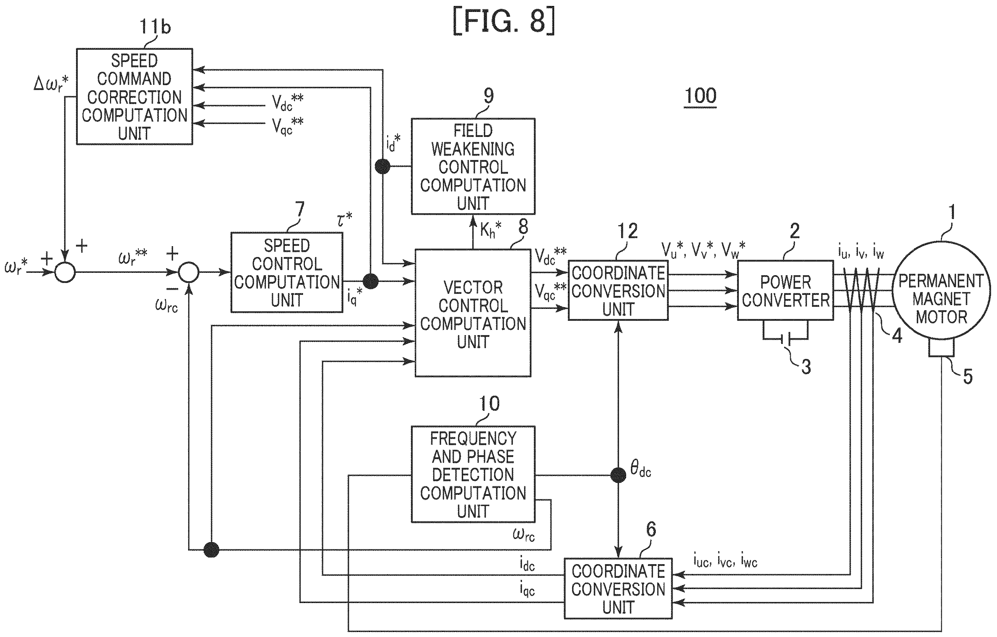

Fig. 8 is a configuration diagram of the power conversion device according to a third embodiment.
[Fig. 9]

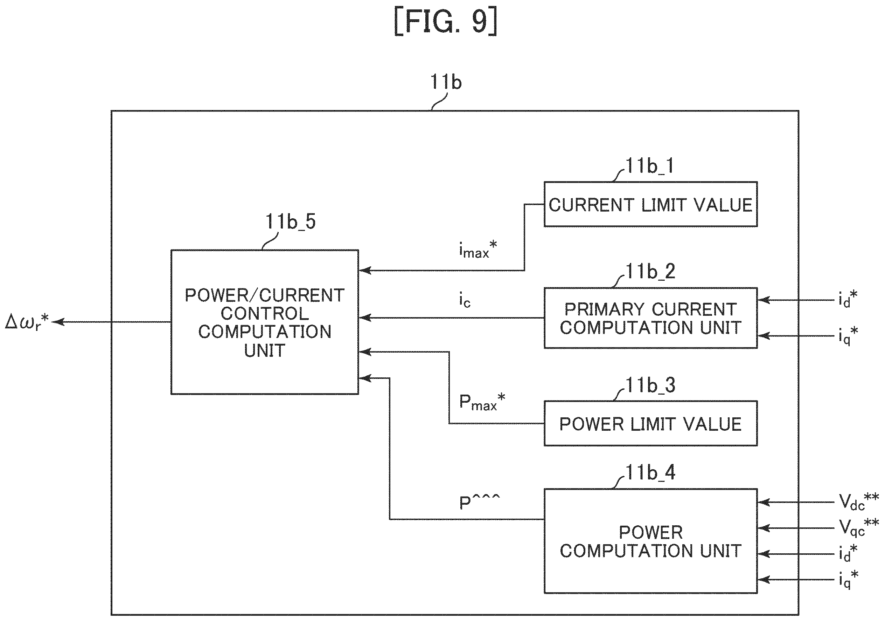

Fig. 9 is a configuration diagram of a speed command correction computation unit according to the third embodiment.
[Fig. 10]

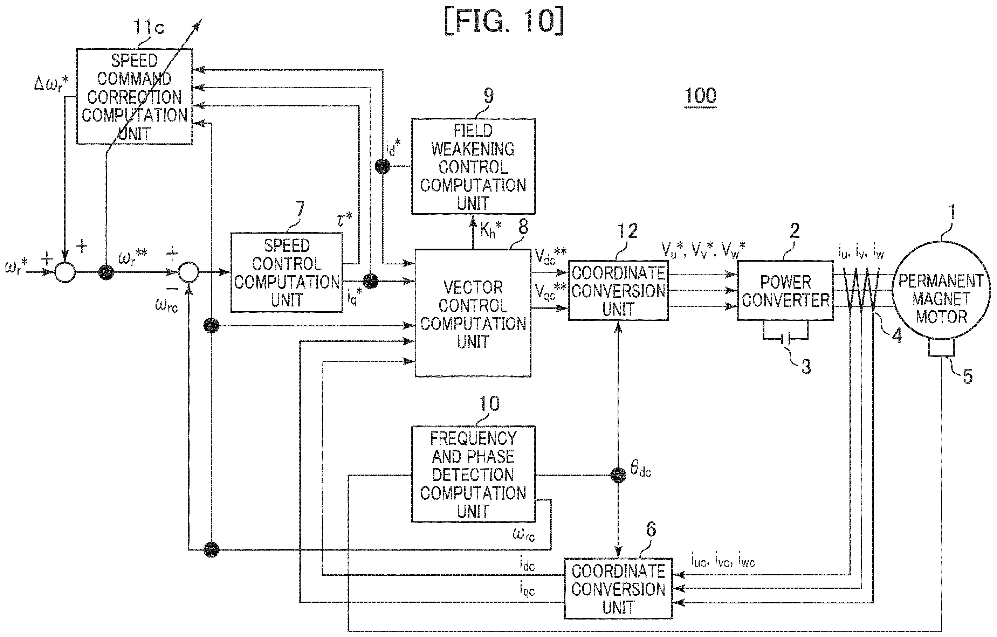

Fig. 10 is a configuration diagram of the power conversion device according to a fourth embodiment.
[Fig. 11]

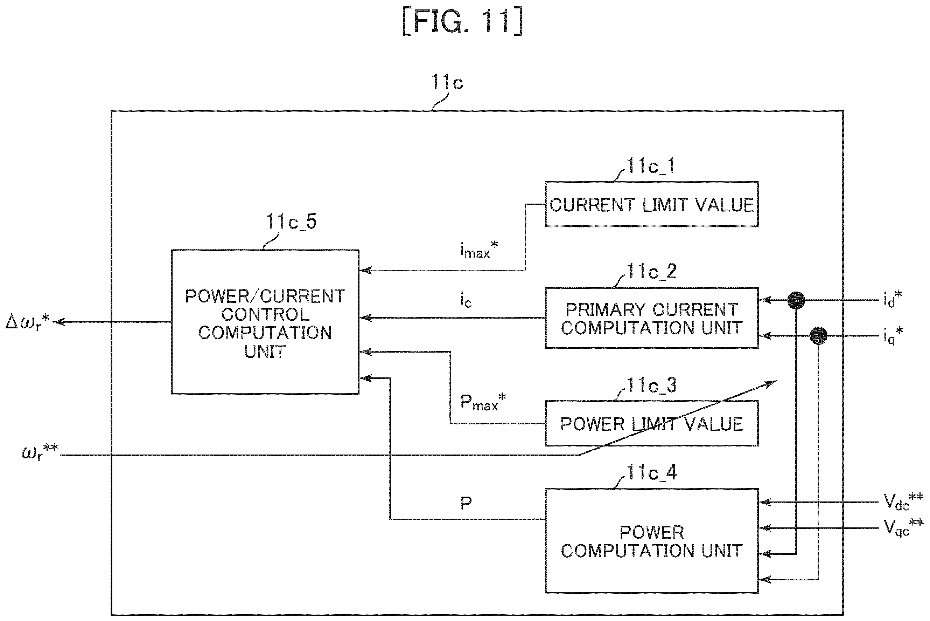

Fig. 11 is a configuration diagram of a speed command correction computation unit according to the fourth embodiment.
[Fig. 12]

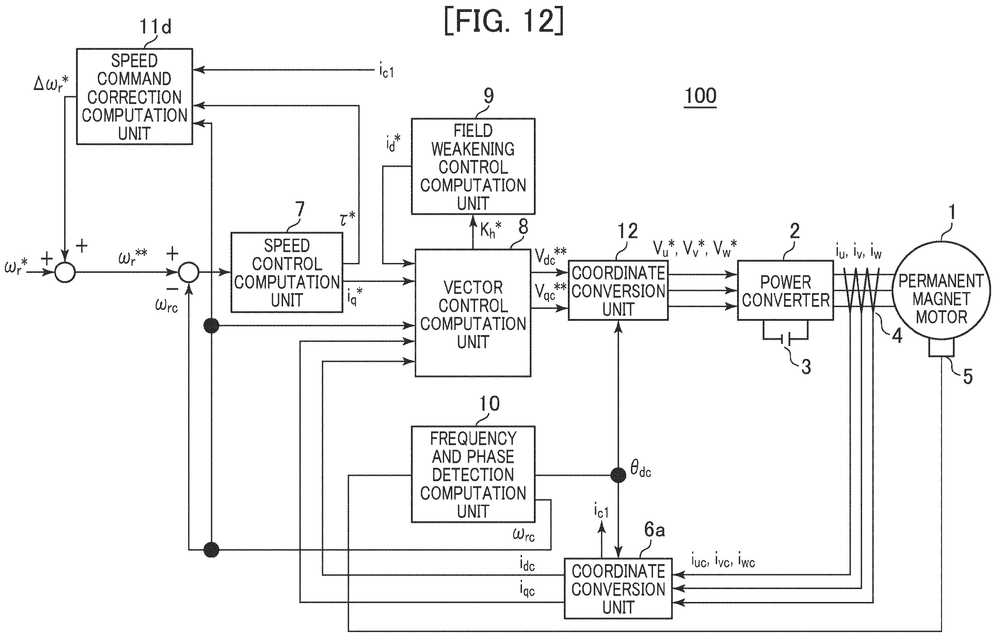

Fig. 12 is a configuration diagram of the power conversion device according to a fifth embodiment.
[Fig. 13]

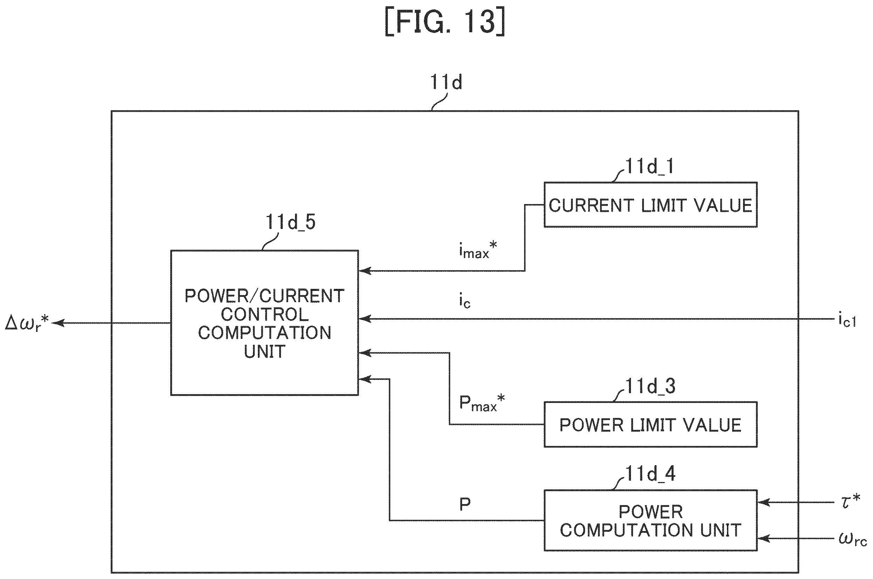

Fig. 13 is a configuration diagram of a speed command correction computation unit according to the fifth embodiment.
[Fig. 14]

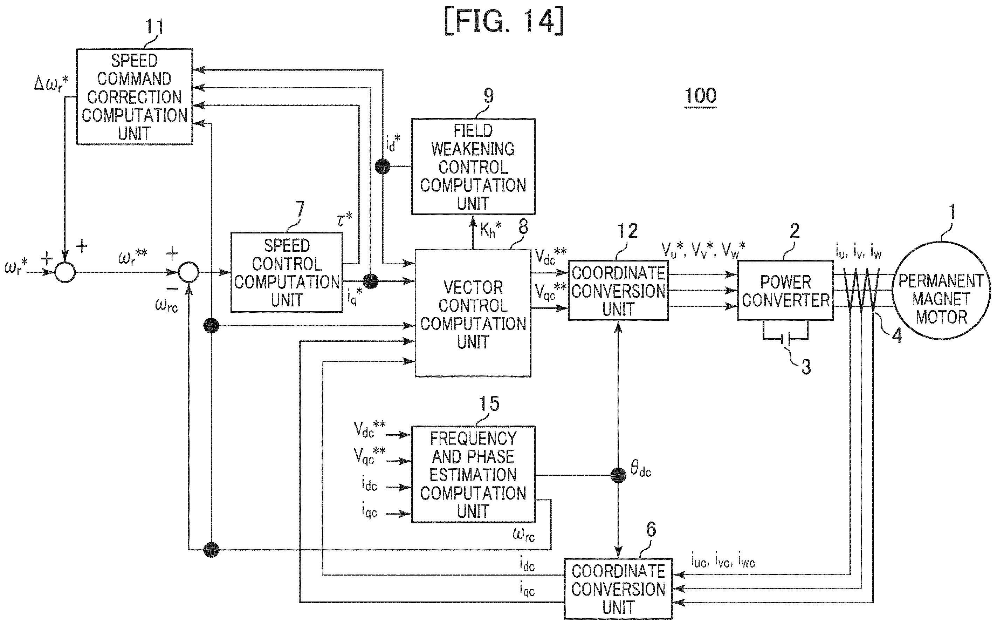

Fig. 14 is a configuration diagram of the power conversion device according to a sixth embodiment.
[Fig. 15]

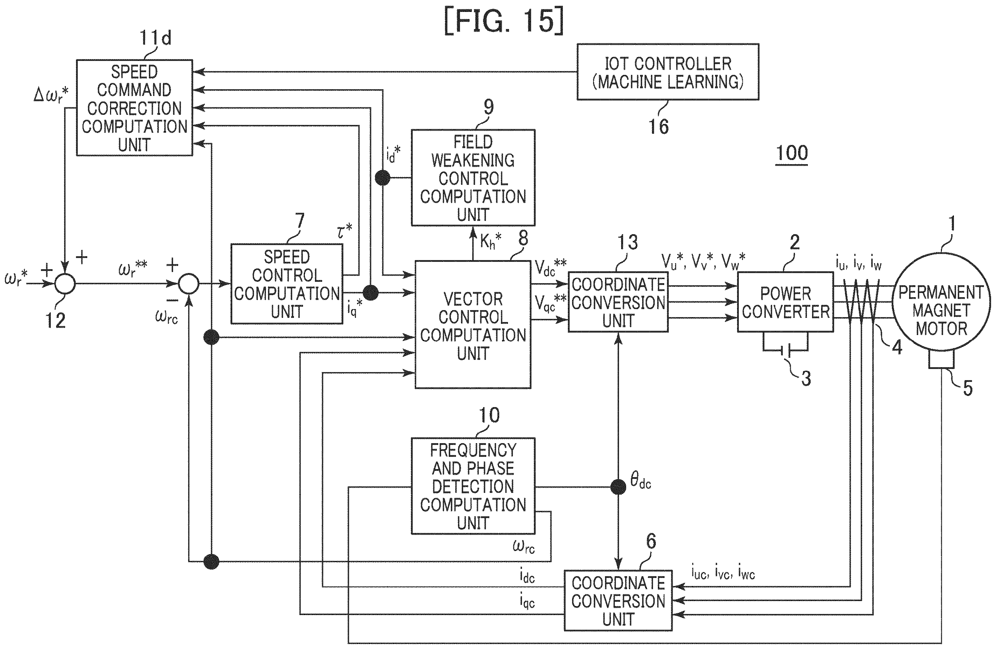

Fig. 15 is a configuration diagram of the power conversion device according to a seventh embodiment.
[Fig. 16]

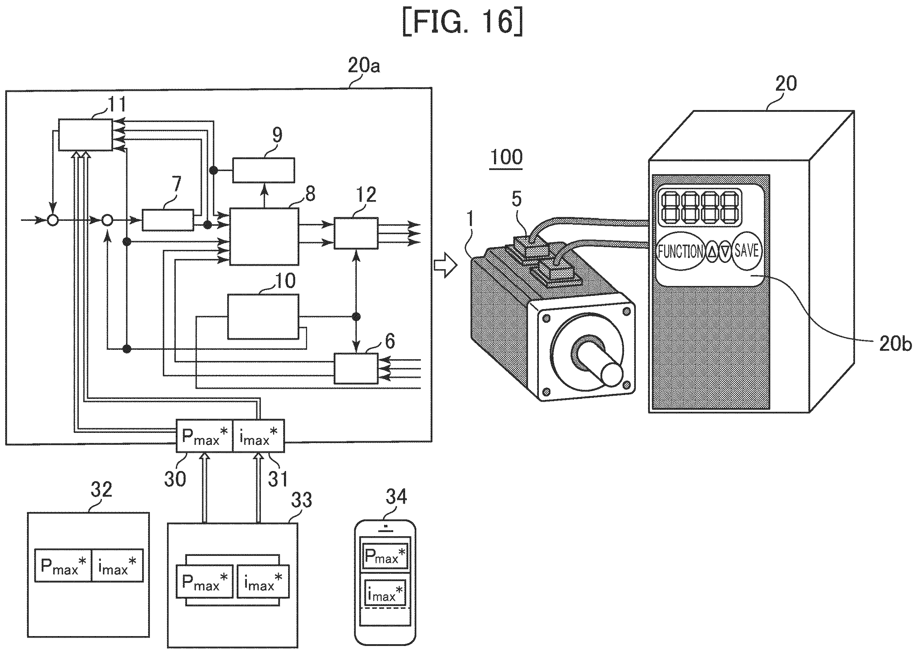

Fig. 16 is a configuration diagram of the power conversion device according to an eighth embodiment.
[Fig. 17]

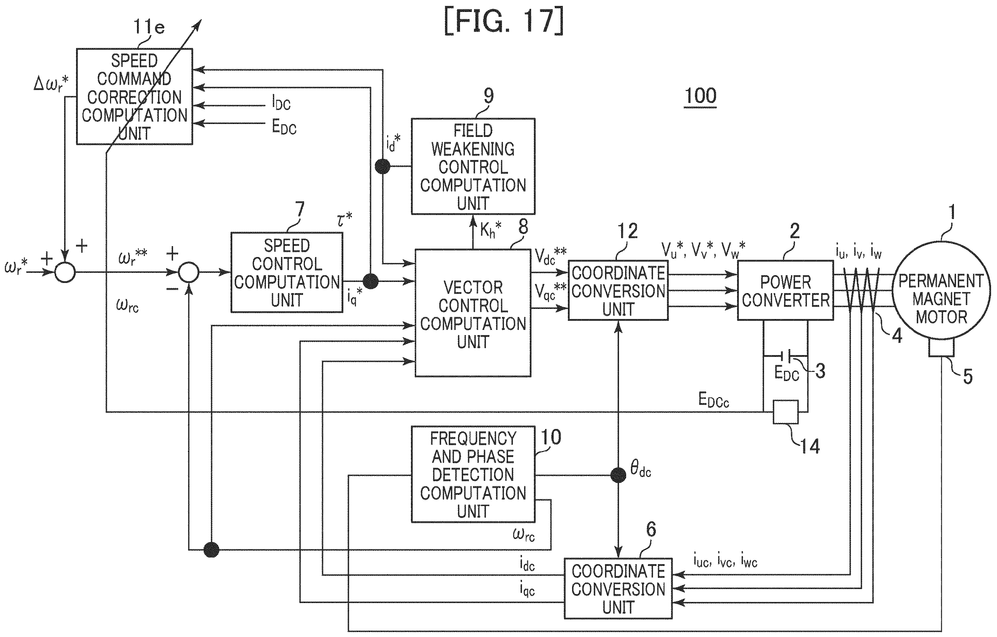

Fig. 17 is a configuration diagram of the power conversion device according to a ninth embodiment.
[Fig. 18]

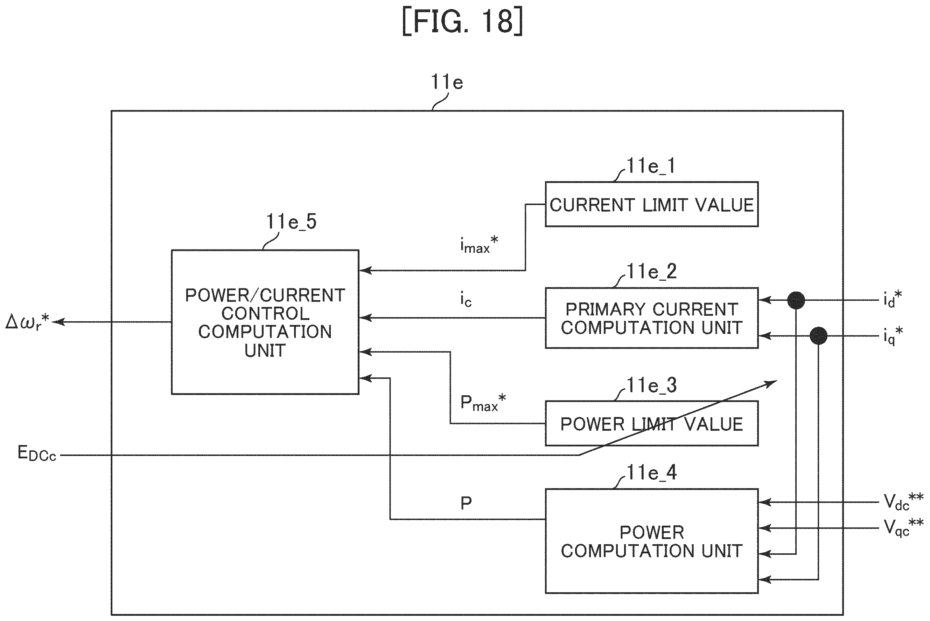

Fig. 18 is a configuration diagram of a speed command correction computation unit according to the ninth embodiment.

Modes for Carrying Out the Invention

Hereinafter, the present embodiments will be explained in detail with reference to the drawings. It is to be noted that the same configurations are denoted by the same reference characters throughout the drawings. The embodiments below are not limited to those depicted in the drawings.

In addition, the embodiments will be given to illustrate the present invention. For explanation clarity, omissions and simplifications will be made, if necessary. The present invention can be carried out in a variety of any other embodiments.

Unless otherwise specified, each constituent element can be single or plural. For easy understanding of the invention, the positions, the sizes, the shapes, the ranges, and the like of constituent elements in the drawings do not necessarily represent the positions, the sizes, the shapes, the ranges, and the like in practical use. Therefore, the present invention is not necessarily limited to the positions, the sizes, the shapes, the ranges, and the like disclosed in the drawings.

[Embodiments]

<First Embodiment>

Fig. 1 is a schematic configuration diagram of a power conversion device 100 according to a first embodiment.

In Fig. 1, a permanent magnet motor 1 outputs motor torque which is formed by combining a torque component based on a magnetic flux of a permanent magnet and the torque component based on the inductance of an armature winding.

A power converter 2 outputs voltage values that are proportional to three-phase alternating current voltage command values $v_u^*$, $v_v^*$, and $v_w^*$ such that an output voltage value and an output frequency value of the permanent magnet motor 1 are variable. A controller (e.g., a microcomputer) of the power converter 2 sets a power limit value $P_{max}^*$ and a primary current limit value $i_{max}^*$, and computes a power limit value $P_{max}^{**}$.

A direct current power source 3 supplies a direct current voltage to the power converter 2.

A current detector 4 outputs $i_{uc}$, $i_{vc}$, and $i_{wc}$ which are detection values of three-phase alternating currents $i_u$, $i_v$, and $i_w$ of the permanent magnet motor 1. Further, the current detector 4 may detect alternating currents of two phases, or, for example, a u phase and a w phase, of the three phases of the permanent magnet motor 1, and obtain the alternating current of a v phase in accordance with $i_v = -(i_u + i_w)$ from the alternating current condition: $(i_u + i_v + i_w = 0)$.

A position detector 5 has a resolution of detecting a position of the permanent magnet motor 1 with high precision, and is used to calculate the speed of the permanent magnet motor 1.

A coordinate conversion unit 6 outputs current detection values $i_{dc}$ and $i_{qc}$ of d-axis and q-axis currents inputted to the permanent magnet motor 1, in accordance with the detection values $i_{uc}$, $i_{vc}$, and $i_{wc}$ of the three-phase alternating currents $i_u$, $i_v$, and $i_w$ and a phase detection value $\theta_{dc}$.

A speed control computation unit 7 computes and outputs a q-axis current command value $i_q^*$ in accordance with a new speed command value $\omega_r^{**}$ which is a sum of a speed command value $\omega_r^*$ and a correction value $\Delta\omega_r^*$ of the speed command value and in accordance with a speed detection value (or a speed estimation value) $w_{rc}$. It is to be noted that the speed detection value (or the speed estimation value) $w_{rc}$ can be defined as speed information.

A vector control computation unit 8 outputs d-axis and q-axis voltage command values $v_{dc}^{**}$ and $v_{dc}^{**}$ which are computed based on d-axis and q-axis current command values $i_d^*$ and $i_q^*$, the current detection values $i_{dc}$ and $i_{qc}$, the speed detection value $\omega_{rc}$, and an electric circuit parameter of the permanent magnet motor 1, and also outputs a modulation rate $K_h^*$ which is the ratio of a voltage command value $V^*$ to one-half of a direct current voltage value $E_{dc}$.

A field weakening control computation unit 9 outputs the d-axis current command value $i_d^*$ in accordance with the modulation rate $K_h^*$ of the voltage command value.

A frequency and phase detection computation unit 10 converts a position detection value $q_d$ detected by the position detector 5 to the phase detection value $\theta_{dc}$ which varies within 0 to $2\pi$ per one ration of mechanical angles of the permanent magnet motor 1. Further, the frequency and phase detection computation unit 10 computes the speed detection value $w_{rc}$ which varies in accordance with the position detection value $q_{dc}$.

A speed command correction computation unit 11 outputs the correction value $\Delta\omega_r^*$ of the speed command value in accordance with the d-axis and q-axis current commands $i_d^*$ and $i_q^*$, a torque command value $\tau^*$, and the speed detection value $w_{rc}$.

A coordinate conversion unit 12 outputs the three-phase alternating current voltage command values $v_u^*$, $v_v^*$, and $v_w^*$ in accordance with the $d_c$-axis and $q_c$-axis voltage command values $v_{dc}^{**}$ and $v_{dc}^{**}$ and the phase detection value $\theta_{dc}$.

First, an explanation will be given of a basic operation of a vector control system using the speed command correction computation unit 11 which is a characteristic of the first embodiment.

The frequency and phase detection computation unit 10 takes an incremental-type or absolute-type encoder signal, and creates the phase detection value $q_{dc}$ whose phase value varies within 0 to $2\pi$ per one ration of mechanical angles. The speed detection value $\omega_{rc}$ is computed in accordance with the following expression (1) using $q_{dc}$.

[Math. 1]

$$\omega_{rc} = \frac{d}{dt}\theta_{dc} \qquad \cdots (1)$$

The speed control computation unit 6 computes the torque command value $\tau^*$ in accordance with the following expression (2) by proportional control and integral control so as to cause the speed detection value $\omega_{rc}$ to follow a new speed command value $\omega_r^{**}$, which will be described later.

[Math. 2]

$$\tau^* = \left(\omega_r^{**} - \omega_{rc}\right)\left(K_{sp} + \frac{K_{si}}{s}\right) \qquad \cdots (2)$$

In expression (2), $K_{sp}$ represents a proportional gain in speed control, and $K_{si}$ represents an integral gain in speed control.

Further, a q-axis current command value $i_q{}^*$ is computed in accordance with the following expression (3) using the torque command value $\tau^*$, the d-axis current command value $i_d{}^*$, and electric parameters ($L_d$, $L_q$, $K_e$) of the permanent magnet motor 1.

[Math. 3]

$$i_q{}^* = \frac{1}{3/2P_m\left(K_c{}^* + (L_d{}^* - L_q{}^*)i_d{}^*\right)}\tau^* \quad \cdots (3)$$

In expression (3), $L_d{}^*$ represents a set d-axis inductance value, $L_q{}^*$ represents a set q-axis inductance value, $K_e{}^*$ represents a set value of an induced voltage coefficient, and $P_m$ represents the number of pole pairs.

The field weakening control computation unit 9 computes the d-axis current command value $i_d{}^*$ in accordance with the following expression (4) by integral control in such a way that the modulation rate $K_h$, which will be described later, does not exceed a limit value $K_h{}^*$ of the modulation rate.

[Math. 4]

$$i_d{}^* = \left(K_h{}^* - K_h\right)\left(K_{p\_id} + \frac{K_{i\_id}}{s}\right) \quad \cdots (4)$$

In expression (4), $K_{p\_id}$ represents a proportional gain in field weakening control, and $K_{i\_id}$ represents an integral gain in field weakening control.

The vector control computation unit 8 first outputs $d_c$-axis and $q_c$-axis voltage reference values $v_{dc}{}^*$ and $v_{qc}{}^*$ in accordance with the following expression (5) using a set winding resistance value $R^*$ which is an electric parameter of the permanent magnet motor 1, the set value $L_d{}^*$ of the d-axis inductance, the set value $L_q{}^*$ of the q-axis inductance, the set value $K_e{}^*$ of the induced voltage coefficient, the $d_c$-axis and $q_c$-axis current command values $i_d{}^*$ and $i_q{}^*$, and the speed detection value $\omega_{rc}$.

[Math. 5]

$$\begin{bmatrix} v_{dc}{}^* = R^*i_d{}^* - \omega_{dc}L_q{}^* \cdot \frac{1}{1 + T_{acr}s}i_q{}^* \\ v_{qc}{}^* = R^*i_q{}^* + \omega_{dc}\left(L_d{}^* \cdot \frac{1}{1 + T_{acr}s}i_d{}^* + K_e{}^*\right) \end{bmatrix} \quad \cdots (5)$$

In expression (5), $T_{acr}$ represents a response time constant in current control.

Second, $d_c$-axis and $q_c$-axis voltage correction values $\Delta v_{dc}$ and $\Delta v_{qc}$ are computed in accordance with the following expression (6) by proportional control and integral control so as to cause the current detection values $i_{dc}$ and $i_{qc}$ of each component to follow the $d_c$-axis and $q_c$-axis current command values $i_d{}^*$ and $i_q{}^*$.

[Math. 6]

$$\begin{bmatrix} \Delta v_{dc} = \left(K_{pd} + \frac{K_{id}}{s}\right)(i_d{}^* - i_{dc}) \\ \Delta v_{qc} = \left(K_{pq} + \frac{K_{iq}}{s}\right)(i_q{}^* - i_{qc}) \end{bmatrix} \quad \cdots (6)$$

In expression (6), $K_{pd}$ represents a proportional gain in $d_c$-axis current control, $K_{id}$ represents an integral gain in $d_c$-axis current control, $K_{pq}$ represents a proportional gain in $q_c$-axis current control, and $K_{iq}$ represents an integral gain in $q_c$-axis current control.

Further, the $d_c$-axis and $q_c$-axis voltage command values $v_{dc}{}^{**}$ and $v_{dc}{}^{**}$ are computed in accordance with the following expression (7).

[Math. 7]

$$\begin{bmatrix} v_{dc}^{**} = v_{dc}^{*} + \Delta v_{dc} \\ v_{qc}^{**} = v_{qc}^{*} + \Delta v_{qc} \end{bmatrix} \qquad \cdots(7)$$

Fig. 2 depicts a configuration of the speed command correction computation unit 11 which is a characteristic of the first embodiment of the present invention.

Reference character 11_1 denotes a setting unit configured to set a current limit value $i_{max}$ for controlling the permanent magnet motor 1 or the power converter 2 at an overcurrent value or less. The current limit value $i_{max}$ is set to be equal to or less than an overcurrent level value $i_{oc\_lvl}$ of the power converter 2 in accordance with the following expression (8).

[Math. 8]

$$i_{max}^{*} < i_{oc\_lvl} \qquad \cdots(8)$$

A primary current computation unit 11_2 computes a primary current command value $i_c^{*}$ in accordance with the following expression (9) using the d-axis and q-axis current command values $i_d^{*}$ and $i_q^{*}$.

[Math. 9]

$$i_c^{*} = \sqrt{i_d^{*2} + i_q^{*2}} \qquad \cdots(9)$$

A primary current detection value $i_c$ may be computed using the d-axis and q-axis current detection values $i_{dc}$ and $i_{qc}$ of the current command values $i_d^{*}$ and $i_q^{*}$, and may be used in place of the primary current command value $i_c^{*}$.

Reference character 11_3 denotes a setting unit configured to set a power limit value $P_{max}$ of the permanent magnet motor 1 or the power converter 2. It is sufficient to set the value which enables operation of the permanent magnet motor 1.

A power computation unit 11_4 computes a power computation value P in accordance with the following expression (10) using the speed detection value $\omega_{rc}$ and the torque command value $\tau^{*}$.

[Math. 10]

$$P = \omega r c \cdot \tau^{*} \qquad \cdots(10)$$

Reference character 11_5 denotes a power/current control computation unit. The above-described current limit value $i_{max}^{*}$, the primary current command value $i_c^{*}$, the power limit value $P_{max}^{*}$, and the power computation value P are inputted to the power/current control computation unit 11_5, and the power/current control computation unit 11_5 computes the correction value $\Delta\omega_r^{*}$ of the speed command value in accordance with the following procedures.

(1) A power correction value $\Delta P_{max}$ is computed in accordance with the following expression (11) by proportional and integral computations so as to adjust the primary current command value $i_c^{*}$ to the current limit value $i_{max}^{*}$ or less.

[Math. 11]

$$\Delta P_{max} = \left(i_{max}^{*} - i_c^{*}\right)\left(K_{p\_acr} + \frac{K_{i\_acr}}{s}\right) \qquad \cdots(11)$$

In expression (11), $K_{p\_acr}$ represents a proportional gain in primary current command value control, and $K_{i\_acr}$ represents an integral gain in primary current command value control.

(2) A new power limit value $P_{max}^{**}$ is computed in accordance with the following expression (12) using the power limit value $P_{max}^{*}$ and the power correction value $\Delta P_{max}$.

[Math. 12]

$$P_{max}^{**} = P_{max}^{*} + \Delta P_{max} \qquad \cdots(12)$$

(3) The correction value $\Delta\omega_r^{*}$ of the speed command value is computed in accordance with the following expression (13) by proportional and integral computations so as to adjust the power computation value P to the new power limit value $P_{max}^{**}$ or less.

[Math. 13]

$$\Delta\omega_r{}^* = \left( K_{p\_\Delta\omega} + \frac{K_{i\_\Delta\omega}}{s} \right) \left( P_{max}{}^{**} - P \right) \qquad \cdots (13)$$

In expression (13), $K_{p\_\Delta w}$ represents a proportional gain in power limit value control, and $K_{i\_\Delta w}$ represents an integral gain in power limit value control.

(4) A new speed command value $\omega_r{}^{**}$ is computed in accordance with the following expression (14) using the speed command value $\omega_r{}^*$ and the correction value $\Delta\omega_r{}^*$ of the speed command value.

[Math. 14]

$$\omega_r{}^{**} = \omega_r{}^* + \Delta\omega_r{}^* \qquad \cdots (14)$$

Next, an explanation will be given of a principle of safe operation in a constant output area of a field weakening region according to the present invention.

Fig. 3 depicts control characteristics when large load torque is applied without using the speed command correction computation unit 11 according to the present invention. This is a simulation result of application of load torque after increase of a speed command value from zero to a base speed.

In Fig. 3, the upper part indicates the speed detection value $\omega_{rc}$ of the permanent magnet motor 1 and the power computation value P while the lower part indicates the primary current detection value $i_c$ which is computed in accordance with the following expression (15).

[Math. 15]

$$i_c = \sqrt{i_{dc}{}^2 + i_{qc}{}^2} \qquad \cdots (15)$$

In Fig. 3, the speed command value $\omega_r{}^*$ is increased from zero to a base speed during time A to B, and large load torque is applied during time C to D. At time E, the speed detection value $\omega_{rc}$ is reduced to adjust the power computation value P to the power limit value $P_{max}{}^*$ or less. The primary current detection value $i_c$ increases to reach the overcurrent level value $i_{oc\_lvl}$ at time F. Therefore, after time F, the operation cannot be continued.

Fig. 4 depicts control characteristics when the speed command correction computation unit 11 according to the present invention is used. The control characteristics in Fig. 4 correspond to a simulation result similar to that depicted in Fig. 3.

In Fig. 4, a value lower than the overcurrent level value $i_{oc\_lvl}$ is set as the primary current command value $i_{max}{}^*$. A new power command value $P_{max}{}^{**}$ is corrected by the power command value $P_{max}{}^*$ at time F, so that the primary current detection value $i_c$ is also controlled by $i_{max}{}^*$. Accordingly, overcurrent does not occur, and stable operation can be performed.

Here, a verification method in an example of a case where the first embodiment is adopted will be explained with reference to Fig. 5.

In Fig. 5, a current detector 21 is mounted in a power conversion device 20 that drives the permanent magnet motor 1, and an encoder 22 is mounted on a shaft of the permanent magnet motor 1.

A speed command value $\omega_r{}^*$ to be given to a controller (not depicted) of the power converter 2 is set to a base speed, and large torque is applied to the permanent magnet motor 1.

The three-phase alternating current detection values ($i_{uc}$, $i_{vc}$, and $i_{wc}$) and a position detection value $\theta$ which is an output of the encoder 22 are inputted to a speed and vector current component calculation unit 23, vector current component detection values $i_{dcc}$ and $i_{qcc}$ are computed in accordance with the following expression (16), a primary current detection value $i_{cc}$ is computed in accordance with the following expression (17), and a speed detection value $\omega_{rcc}$ is computed in accordance with the following expression (18).

[Math. 16]

$$\begin{aligned}
\begin{bmatrix} i_{\alpha cc} \\ i_{\beta cc} \end{bmatrix} &= \frac{2}{3} \begin{bmatrix} 1 & -1/2 & -1/2 \\ 0 & +\sqrt{3}/2 & -\sqrt{3}/2 \end{bmatrix} \begin{bmatrix} i_{uc} \\ i_{vc} \\ i_{wc} \end{bmatrix} \\
\begin{bmatrix} i_{dcc} \\ i_{qcc} \end{bmatrix} &= \begin{bmatrix} \cos\theta & \sin\theta \\ -\sin\theta & \cos\theta \end{bmatrix} \begin{bmatrix} i_{\alpha cc} \\ i_{\beta cc} \end{bmatrix}
\end{aligned} \qquad \cdots (16)$$

[Math. 17]

$$i_{cc} = \sqrt{i_{dcc}^2 + i_{qcc}^2} \qquad \cdots (17)$$

[Math. 18]

$$\omega_{rcc} = \frac{d}{dt}\theta \qquad \cdots (18)$$

In addition, a torque estimation value t^ is computed in accordance with the following expression (19) using the electric parameters ($K_e^*$, $L_d^*$, and $L_q^*$) of the permanent magnet motor 1 and the vector current component detection values $i_{dcc}$, $i_{qcc}$.
[Math. 19]

$$\tau^{\wedge} = \frac{3}{2}P_m\left(K_e^* + (L_d^* - L_q^*)i_{dcc}\right)i_{qcc} \qquad \cdots (19)$$

Finally, a power estimation value P^ is computed in accordance with the following expression (20) using the speed detection value $\omega_{rcc}$ and the torque estimation value t^.
[Math. 20]

$$P^{\wedge} = \omega_{rcc} \cdot \tau^{\wedge} \qquad \cdots (20)$$

Use of the first embodiment of the present invention can be verified by observing the operation waveforms computed using the expressions (16) to (20) to confirm the operation waveforms depicted in Fig. 4.
The first embodiment of the present invention has the above-described configuration. Accordingly, it is possible to provide the power conversion device 100 in which, in a case where load torque that is larger than the torque value of the permanent magnet motor 1 which varies depending on the direct current voltage of the power converter 2 is applied, overcurrent does not occur and stable operation can be performed in a constant output area of a field weakening region.

<Second Embodiment>

Next, a second embodiment of the present invention will be explained.
Fig. 6 is a schematic configuration diagram of the power conversion device 100 according to the second embodiment.
In the above-described first embodiment, the speed detection value $w_{rc}$ and the torque command value $\tau^*$ as well as the current commands $i_d^*$ and $i_q^*$ are inputted to the speed command correction computation unit 11. In the second embodiment, a direct current voltage value $E_{DC}$ and a direct current value $I_{DC}$ are inputted in place of the speed detection value $w_{rc}$ and the torque command value $\tau^*$.
In Fig. 6, reference characters 1, 2, 5 to 10, and 12 denote the same constituent elements as those in Fig. 1. Reference character 13 denotes a current detector that detects the direct current $I_{DC}$. Reference character 14 denotes a voltage detector that detects the direct current voltage $E_{DC}$.
A current detection value of the direct current is defined as $I_{DC}$, and a voltage detection value of the direct current voltage is defined as $E_{DC}$.
Fig. 7 depicts a configuration of a speed command correction computation unit 11a according to the second embodiment. In Fig. 7, reference characters 11a_1, 11a_2, 11a_3, and 11a_5 denote the same constituent elements as those denoted by reference characters 11_1, 11_2, 11_3, and 11_5 in Fig. 2.
Reference character 11a_4 denotes a power computation unit that computes a power computation value P^^ in accordance with the following expression (21) using a current detection value $I_{DCc}$ of the direct current and a voltage detection value $E_{DCc}$ of the direct current voltage.
[Math. 21]

$$P^{\wedge\wedge} = E_{DCc} I_{DCc} \qquad \cdots (21)$$

A power/current control computation unit 11a_5 replaces the power computation value P^^ with the power computation value P, and computes the correction value $\Delta\omega_r^*$ of the speed command value.
At the power/current control computation unit 11a_5 according to the second embodiment, direct current side power computation values which are the direct current voltage value $E_{DC}$ and the direct current value $I_{DC}$ are used in place of the speed detection value $w_{rc}$ and the torque command value $\tau^*$, and stable control characteristics can also be realized.

According to the second embodiment, the same advantageous effects as those in the first embodiment can also be obtained.

It is to be noted that existing equipment can be used as the current detector 13 and the voltage detector 14.

<Third Embodiment>

Next, a third embodiment of the present invention will be explained.

Fig. 8 is a configuration diagram of the power conversion device 100 according to the third embodiment.

In the above-described first embodiment, the speed detection value $w_{rc}$ and the torque command value $\tau^*$ as well as the current commands $i_d^*$ and $i_q^*$ are inputted to the speed command correction computation unit 11. In the third embodiment, the d-axis and q-axis voltage command values $v_{dc}^{**}$ and $v_{dc}^{**}$ are inputted in place of the speed detection value $w_{rc}$ and the torque command value $\tau^*$.

In Fig. 8, reference characters 1 to 10 and 12 denote the same constituent elements as those in Fig. 1.

Fig. 9 depicts a configuration of a speed command correction computation unit 11b according to the third embodiment. In Fig. 9, reference characters 11b_1, 11b_2, 11b_3, and 11b_5 denote the same constituent elements as those denoted by reference characters 11_1, 11_2, 11_3, and 11_5 in Fig. 2. Reference character 11b_4 denotes a power computation unit that computes a power computation value $P^{\wedge\wedge\wedge}$ in accordance with the following expression (22) using the d-axis and q-axis current command values $i_d^*$ and $i_q^*$, the voltage command values $v_{dc}^{**}$ and $v_{qc}^{**}$, and the set resistance value $R^*$ which is an electric parameter of the permanent magnet motor 1.

[Math. 22]

$$P^{\wedge\wedge\wedge} = v_{dc}^{**} i_d^{*} + v_{qc}^{**} i_q^{*} - R^{*}\left(i_d^{*\wedge 2} + i_q^{*\wedge 2}\right) \quad \cdots (22)$$

A power/current control computation unit 11b_5 may replace the power computation value $P^{\wedge\wedge\wedge}$ with the power computation value P and compute the correction value $\Delta\omega_r^*$ of the speed command value.

According to the third embodiment, the power computation value in vector control is used, and stable control characteristics can also be realized as in the first embodiment.

Compared to the first and second embodiments, the third embodiment provides an advantageous effect that replacement with a software configuration can be implemented.

<Fourth Embodiment>

Next, a fourth embodiment of the present invention will be explained.

Fig. 10 is a configuration diagram of the power conversion device 100 according to the fourth embodiment.

According to the fourth embodiment, a parameter (power limit value) set for a speed command correction computation unit 11c is corrected by a new speed command value $\omega_r^{**}$ (corrected speed command value).

In Fig. 10, reference characters 1 to 10 and 12 denote the same constituent elements as those in Fig. 1. Fig. 11 depicts a configuration of the speed command correction computation unit 11c. In Fig. 11, reference characters 11c_1, 11c_2, 11b_4, and 11b_5 denote the same constituent elements as those denoted by reference characters 11_1, 11_2, 11_4, and 11_5 in Fig. 2. Reference character 11c_3 denotes a setting unit that sets the power limit value $P_{max}^*$. The power limit value $P_{max}^*$ is a fixed value irrespective of the magnitude of the new speed command value $\omega_r^{**}$ in the first embodiment, but the power limit value $P_{max}^*$ may be changed according to the speed command value $\omega_r^{**}$. Alternatively, a reference table for outputting the power limit value $P_{max}^*$ according to the magnitude of the speed command value $\omega_r^{**}$ may be prepared.

Besides the same advantageous effects as those of the first embodiment, the fourth embodiment provides an advantageous effect that, by optimizing the power limit value $P_{max}^*$ according to the operation state, the primary current detection value $i_c$ does not become a higher value than is needed, the current value is reduced, and more highly efficient and stable control characteristics can thus be realized.

<Fifth Embodiment>

Next, a fifth embodiment of the present invention will be explained.

Fig. 12 is a configuration diagram of the power conversion device 100 according to the fifth embodiment.

In the above-described first to fourth embodiments, the d-axis and q-axis current command values $i_d^*$ and $i_q^*$ of the rotary coordinate system are inputted to the speed command correction computation unit 11. In contrast, in the fifth embodiment, a primary current detection value $i_{c1}$ (which is a current value calculated from a detection value of a current inputted to the permanent magnet motor 1) of a stationary coordinate system is inputted.

In Fig. 12, reference characters 1 to 5, 7 to 10, and 12 denote the same constituent elements as those in Fig. 1. Reference character 6a denotes a coordinate conversion unit that computes the $d_c$-axis and $q_c$-axis current detection values $i_{dc}$ and $i_{qc}$ and a primary current detection value $i_{c1}$. The coordinate conversion unit 6a computes the primary current detection value $i_{c1}$ in accordance with the following expression (23).

[Math. 23]

$$\left. \begin{array}{l} \delta_i = \tan^{-1}\left[-\dfrac{i_{dc}}{i_{qc}}\right] \\[2mm] i_{c1} = -i_{dc}\sin(\delta_i) + i_{qc}\cos(\delta_i) \end{array} \right\} \quad \cdots (23)$$

Fig. 13 depicts a configuration of a speed command correction computation unit 11d. In Fig. 13, reference characters 11d_1, 11d_3, 11d_4, and 11d_5 denote the same constituent elements as those denoted by reference characters 11_1, 11_3, 11_4, and 11_5 in Fig. 2. The primary current detection value $i_{c1}$ may be replaced with the detection value $i_c$, and the correction value $\Delta\omega_r{}^*$ of the speed command value may be computed at 11d_5.

Besides the same advantageous effects as those of the first embodiment, the fifth embodiment provides an advantageous effect that the primary current computation unit 11_2 of the first embodiment can be omitted and stable control characteristics can be realized with a small amount of control computation.

It is to be noted that the speed command correction computation unit 11d of the fifth embodiment is formed by eliminating the primary current computation unit 11_2 from the speed command correction computation unit 11 of the first embodiment and receives the primary current detection value $i_{c1}$, but the speed command correction computation unit 11d may be formed by eliminating the speed command correction computation unit 11a_2, 11b_2, or 11c_2 of the second to fourth embodiments and receive the primary current detection value $i_{c1}$.

<Sixth Embodiment>

Next, a sixth embodiment of the present invention will be explained.

Fig. 14 is a configuration diagram of the power conversion device 100 according to the sixth embodiment.

In the above-described first embodiment, the position detector 5 is mounted on the permanent magnet motor 1. In contrast, in the sixth embodiment, the position detector 5 is omitted.

In Fig. 14, reference characters 1 to 4 and 6 to 12 denote the same constituent elements as those in Fig. 1. The $d_c$-axis and $q_c$-axis voltage command values $v_{dc}{}^{**}$ and $v_{dc}{}^{**}$ of the power converter 2 and the current detection values $i_{dc}$ and $i_{qc}$ are inputted to reference character 15, and reference character 15 outputs a speed estimation value $\omega_{rc}$ and a position estimation value $\theta_{dc}$ based on the inputted values.

The frequency and phase estimation subtraction unit 15 estimates a phase error $\Delta\theta$ which is a phase difference between a dq-axis which is the rotary coordinate system of the permanent magnet motor 1 and is based on a magnetic flux and a $d_c q_c$-axis which is a control reference, in accordance with the following expression (24).

[Math. 24]

$$\Delta\theta_c = \tan^{-1}\left(\frac{v_{dc}{}^{**} - R^*i_{dc} + \omega_{rc}L_q{}^*i_{qc}}{v_{qc}{}^{**} - R^*i_{qc} - \omega_{rc}L_q{}^*i_{dc}}\right) \quad \cdots (24)$$

To follow the command value $\Delta\theta_c{}^*$ (= 0), the speed estimation value $\omega_{rc}$ of the permanent magnet motor 1 is computed in accordance with the following expression (25) by P (proportional) + I (integral) control, and a phase estimation value $\theta_{dc}$ is computed in accordance with the following expression (26) by I (integral) control.

[Math. 25]

$$\omega_{rc} = \left(K_{p\_pll} + \frac{K_{p-pll}}{s}\right)(\Delta\theta_c{}^* - \Delta\theta_c) \quad \cdots (25)$$

[Math. 26]

$$\theta_{dc} = \frac{1}{s} \cdot \omega_{rc} \qquad \cdots (26)$$

In expression (25), $K_{p\_pll}$ represents a proportional gain in PLL control and $K_{i\_pll}$ represents an integral gain in PLL control.

Besides the same advantageous effects as those of the first embodiment, the sixth embodiment provides an advantageous effect that the position detector 5 of the first embodiment can be omitted and inexpensive and highly stable control characteristics can be realized.

The sixth embodiment is also applicable to the first to fifth embodiments.

<Seventh Embodiment>

Next, a seventh embodiment of the present invention will be explained.

Fig. 15 is a configuration diagram of the power conversion device 100 according to the seventh embodiment.

In the first to sixth embodiments, the power limit value $P_{max}^*$ and the primary current limit value $i_{max}^*$ are set for the controller (e.g., the microcomputer) of the power converter 2, and the power limit value $P_{max}^{**}$ is computed. In contrast, in the seventh embodiment, a control state amount is fed back to an IOT controller 16 at a higher level to perform machine learning such as deep learning, and the above-described power limit value $P_{max}^*$ and the primary current limit value $i_{max}^*$ are re-determined in the speed command correction computation unit 11d.

In Fig. 15, reference characters 1 to 12 denote the same constituent elements as those in Fig. 1.

In Fig. 15, the voltage command values $v_{qc}^*$ and $v_{dc}^*$ for the power converter 2, the detection values $i_{dc}$ and $i_{qc}$ of a current inputted to the permanent magnet motor 1, a phase error, and a speed estimation value are fed back to the IOT controller 16 which is a higher level device, and are analyzed such that a predetermined value related to the power limit value or a parameter related to a predetermined current value is automatically corrected. That is, the power conversion device 100 includes the IOT controller 16 that is configured to analyze a feedback of the voltage command values $v_{qc}^*$ and $v_{qc}^*$ for the power converter 2, the detection values $i_{dc}$ and $i_{qc}$ of a current inputted to the permanent magnet motor 1, and a phase error and a speed estimation value of the permanent magnet motor 1, and automatically correct a parameter related to a power limit value or a parameter related to a current.

According to the seventh embodiment, the same advantageous effects as those of the first embodiment can also be provided. In the seventh embodiment, a feedback is sent to the IOT controller 16 to perform machine learning such as deep learning, and the above-described power limit value $P_{max}^*$ and primary current limit value $i_{max}^*$ are re-determined for the speed command correction computation unit 11d. Accordingly, more highly stable and highly efficient control characteristics can be realized without any adjustment.

It is to be noted that the seventh embodiment is also applicable to the second to sixth embodiments.

<Eighth Embodiment>

Next, an eighth embodiment of the present invention will be explained.

Fig. 16 is a configuration diagram of the power conversion device 100 according to the eighth embodiment.

In the eighth embodiment, the present invention is applied to a permanent magnet motor driving system. In Fig. 16, constituent elements identical to those denoted by reference characters 1 to 12 in Fig. 1 are provided.

The permanent magnet motor 1 having the constituent elements equivalent to those depicted in Fig. 1 is driven by the power conversion unit 20. The power conversion unit 20 is a microcomputer in which the constituent elements denoted by reference characters 6 to 12 depicted in Fig. 1 constitute software 20a and the constituent elements denoted by reference characters 2 to 5 depicted in Fig. 1 are mounted as hardware.

Further, by means of a higher level device such as a digital operator 20b, a personal computer 32, a tablet 33, or a smartphone 34, a "power limit value $P_{max}^*$" 30 and a "primary current limit value $i_{max}^*$" 31 in the software 20a can be set and changed. In the power conversion unit 20, a parameter related to a power limit value or a parameter related to a current in the permanent magnet motor 1 are set, and the parameters set in the power conversion unit 20 can be set or changed via the digital operator, the personal computer 32, the tablet 33, or the smartphone 34.

It is to be noted that the "power limit value $P_{max}^*$" 30 and the "primary current limit value $i_{max}^*$" 31 may be set in a field bus such as a programmable logic controller, a local area network connected with a computer, or an IOT controller.

Moreover, an example of application to the first embodiment is described in the eighth embodiment, but application to the second to seventh embodiments can also be made.

In the first to eighth embodiments, the voltage correction values $\Delta v_{dc}$ and $\Delta v_{qc}$ are obtained from the current command values $i_d^*$ and $i_q^*$, and the current detection values $i_{dc}$, $i_{qc}$, and the computation for summing the voltage correction values $\Delta v_{dc}$ and $\Delta v_{qc}$ and the voltage reference value in the vector control (expression (7)) is conducted. Alternatively, intermediate current command values $i_d^{**}$ and $i_q^{**}$, which are used in a vector control computation indicated as the following expression (27), may be obtained from the current command values $i_d{}^*$ and $i_q{}^*$ and the current detection values $i_{dc}$ and $i_{qc}$, and then, a vector control computation indicated as the following expression (28) may be conducted using the speed detection value or speed estimation value $\omega_{rc}$ and the electrical circuit parameters of the permanent magnet motor 1.

[Math. 27]

$$\left[\begin{array}{l} i_d{}^{**} = (K_{pd1} + \dfrac{K_{id1}}{s})(i_d{}^* - i_{dc}) \\[3mm] i_q{}^{**} = (K_{pq1} + \dfrac{K_{iq1}}{s})(i_q{}^* - i_{qc}) \end{array}\right] \quad \cdots(27)$$

[Math. 28]

$$\left[\begin{array}{l} v_{dc}{}^{***} = R^* i_d{}^{**} - \omega_{rc} L_q{}^* \dfrac{1}{1+T_q s} i_q{}^{**} \\[3mm] v_{qc}{}^{***} = R^* i_q{}^{**} + \omega_{rc} L_d{}^* \dfrac{1}{1+T_d s} i_d{}^{**} + \omega_{rc} K_e{}^{**} \end{array}\right] \quad \cdots(28)$$

In expressions (27) and (28), $K_{pd1}$ represents a proportional gain in $d_c$-axis current control, $K_{id1}$ represents an integral gain in $d_c$-axis current control, $K_{pq1}$ represents a proportional gain in $q_c$-axis current control, $K_{iq1}$ represents an integral gain in $q_c$-axis current control, $T_d$ represents a d-axis electrical time constant ($L_d/R$), and $T_q$ represents a q-axis electrical time constant ($L_q/R$).

Alternatively, a $d_c$-axis proportional computation component voltage correction value $\Delta v_{d\_p}{}^*$, a $d_c$-axis integral computation component voltage correction value $\Delta v_{d\_i}{}^*$, a $q_c$-axis proportional computation component voltage correction value $\Delta v_{q\_p}{}^*$, and a $q_c$-axis integral computation component voltage correction value $\Delta v_{q\_i}{}^*$, which are used in a vector control computation, may be obtained from the current command values $i_d{}^*$ and $i_q{}^*$ and the current detection values $i_{dc}$ and $i_{qc}$ in accordance with the following expression (29), and then, a vector control computation indicated as the following expression (30) may be conducted using the speed detection value or speed estimation value $\omega_{rc}$ and the electric circuit parameters of the permanent magnet motor 1.

[Math. 29]

$$\left[\begin{array}{l} \Delta v_{d\_p}{}^* = K_{pd2}(i_d{}^* - i_{dc}) \\[3mm] \Delta v_{d\_i}{}^* = \dfrac{K_{id2}}{s}(i_d{}^* - i_{dc}) \\[3mm] \Delta v_{q\_p}{}^* = K_{pq2}(i_q{}^* - i_{qc}) \\[3mm] \Delta v_{q\_i}{}^* = \dfrac{K_{iq2}}{s}(i_q{}^* - i_{qc}) \end{array}\right] \quad \cdots(29)$$

In expression (29), $K_{pd2}$ represents a proportional gain in $d_c$-axis current control, $K_{id2}$ represents an integral gain in $d_c$-axis current control, $K_{pq2}$ represents a proportional gain in $q_c$-axis current control, and $K_{iq2}$ represents an integral gain in $q_c$-axis current control.

[Math. 30]

$$\left[\begin{array}{l} v_{dc}{}^{****} = (\Delta v_{d\_p}{}^* + \Delta v_{d\_i}{}^*) - \omega_{rc} \dfrac{L_q{}^*}{R^*} \Delta v_{q\_i}{}^* \\[3mm] v_{qc}{}^{****} = (\Delta v_{q\_p}{}^* + \Delta v_{q\_i}{}^*) + \omega_{rc} \dfrac{L_d{}^*}{R^*} \Delta v_{d\_i}{}^* + \omega_{rc} K_e{}^* \end{array}\right] \quad \cdots(30)$$

Moreover, a vector control computation indicated as the following expression (31) may be conducted using a primary delay signal $i_{qctd}$ of the $d_c$-axis current command value $i_d{}^*$, the $q_c$-axis current detection value $i_{qc}$, the speed estimation value $\omega_{rc}$, and electric circuit parameters of the permanent magnet motor 1.

[Math. 31]

$$\begin{bmatrix} v_{dc}{}^{*****} = R^* i_d{}^* - \omega_{rc} L_q{}^* i_{qctd} \\ v_{qc}{}^{*****} = R^* i_{qctd} + \omega_{rc} L_d{}^* i_d{}^* + \omega_{rc} Ke^* \end{bmatrix} \quad \cdots (31)$$

It is to be noted that, in the first to eighth embodiments, an Si (silicon) semiconductor element or a wide band gap semiconductor element of SiC (silicon carbide), GaN (gallium nitride), or the like may be used as a switching element constituting the power converter 2.

According to the eighth embodiment, the same advantageous effects as those of the first embodiment can also be provided. Further, if the eighth embodiment is applied to an AC servo or an inverter that is driven by the permanent magnet motor 1, highly stable and highly efficient control characteristics can also be realized in vector control with/without the position detector 5.

<Ninth Embodiment>

Next, a ninth embodiment of the present invention will be explained.

Fig. 17 is a configuration diagram of the power conversion device 100 according to the ninth embodiment.

In the ninth embodiment, a parameter that is set for a speed command correction computation unit 11e is corrected by the direct current voltage detection value $E_{DCc}$.

Reference characters 1 to 10 and 12 in Fig. 17 denote the same constituent elements as those in Fig. 1. A voltage detector 14 detects the direct current voltage $E_{dc}$. It is to be noted that a voltage detection value of a direct current voltage is denoted by $E_{DCc}$.

Fig. 18 depicts a configuration of the speed command correction computation unit 11e. In Fig. 18, reference characters 11e_1, 11e_2, 11e_4, and 11e_5 denote the same constituent elements as those denoted by 11_1, 11_2, 11_4, and 11_5 in Fig. 2. In addition, reference character 11e_3 in Fig. 18 denotes a setting unit that sets the power limit value $P_{max}{}^*$.

In the first embodiment, the limit value $P_{max}{}^*$ is a fixed value irrespective of the magnitude of the direct current voltage detection value $E_{DCc}$. However, the power limit value $P_{max}{}^*$ may be corrected (replaced) according to the detection value $E_{DCc}$. Alternatively, a reference table for outputting the limit value $P_{max}{}^*$ according to the magnitude of the detection value $E_{DCc}$ may be prepared.

Besides the same advantageous effects as those of the first embodiment, the ninth embodiment provides an advantageous effect that, by optimizing the power limit value $P_{max}{}^*$ according to the operation state, the primary current detection value $i_c$ does not become a higher value than is needed, the current value is reduced, and highly efficient and stable control characteristics can thus be realized.

Description of Reference Characters

1: Permanent magnet motor
2: Power converter
3: Direct current power source
4: Current detector
5: Position detector
6, 6a: Coordinate conversion unit
7: Speed control computation unit
8: Vector control computation unit
9: Field weakening control computation unit
10: Frequency and phase detection computation unit
11, 11a, 11b, 11c, 11d: Speed command correction computation unit
12: Coordinate conversion unit
13: Direct current detector
14: Direct current voltage detector

15: Frequency and phase estimation computation unit
16: IOT controller
20: Power conversion unit
20a: Software unit of power conversion unit
20b: Digital operator of power conversion unit
21: Current detector
22: Encoder
23: Speed and vector current component calculation unit
24: Primary current detection value and power computation value observation unit
30: Power limit value
31: Primary current limit value
32: Personal computer
33: Tablet
34: Smartphone
100: Power conversion device
$i_d{}^*$: d-axis current command value
$i_q{}^*$: q-axis current command value
$i_{dc}$: d-axis current command value
$i_{qc}$: $q_c$-axis current command value
$\tau^*$: Torque command value
$\omega_{rc}$: Speed detection value (or speed estimation value)
$\omega_r$: Speed of permanent magnet motor 1
$\omega_r{}^*$: Speed command value
$v_{dc}{}^*$, $v_{dc}{}^{**}$, $v_{dc}{}^{***}$, $v_{dc}{}^{****}$, $v_{dc}{}^{*****}$: d-axis voltage command value
$v_{qc}{}^*$, $v_{qc}{}^{**}$, $v_{qc}{}^{***}$, $v_{qc}{}^{****}$, $v_{qc}{}^{*****}$: q-axis voltage command value
$P$, $P^\wedge$, $P^{\wedge\wedge}$: Power computation value
$P_{max}{}^*$, $P_{max}{}^{**}$: Power limit value
$i_{max}{}^*$: Primary current command limit value
$i_c$, $i_{c1}$: Primary current detection value

## Claims

1. A power conversion device comprising:

   a permanent magnet motor;
   a power converter that supplies power to the permanent magnet motor; and
   a speed command correction computation unit that corrects a speed command value in accordance with speed information, a torque command value, and a primary current, wherein
   the speed command correction computation unit computes a limit value of the power to limit a current value of the permanent magnet motor to a predetermined limit value or less and corrects the speed command value in such a way that the power does not increase to the limit value of the power, if load torque that is larger than a torque value of the permanent magnet motor which varies depending on a direct current voltage of the power converter is applied.

2. The power conversion device according to claim 1, wherein

   the speed command correction computation unit
   corrects the speed command value in such a way that power computed from the torque command value and the speed information does not increase to the limit value of the power.

3. The power conversion device according to claim 1, wherein

   the speed command correction computation unit
   corrects the speed command value in such a way that power computed from a direct current voltage value and a direct current value of the power converter does not increase to the limit value of the power.

14

4. The power conversion device according to claim 1, wherein

   the speed command correction computation unit
   corrects the speed command value in such a way that power computed from a dq-axis voltage value and a dq-axis current value of the permanent magnet motor does not increase to the limit value of the power.

5. The power conversion device according to any one of claims 2 to 4, wherein
   the primary current is a current that is calculated from a detection value of a current inputted to the permanent magnet motor.

6. The power conversion device according to any one of claims 2 to 4, wherein
   the limit value of the power is corrected by the corrected speed command value.

7. The power conversion device according to any one of claims 2 to 4, further comprising:

   a position detector that detects a position of the permanent magnet motor; and
   a frequency and phase detection computation unit that computes a speed of the permanent magnet motor in accordance with the position of the permanent magnet motor detected by the position detector.

8. The power conversion device according to any one of claims 2 to 4, further comprising:
   a frequency and phase estimation computation unit that estimates a position and a speed of the permanent magnet motor in accordance with a voltage command value and a current detection value of the power converter.

9. The power conversion device according to any one of claims 2 to 4, further comprising:
   an IOT controller that analyzes a feedback of a voltage command value $v_{dc}{}^*$ for the power converter, a detection value of a current inputted to the permanent magnet motor, and a phase error and a speed estimation value of the permanent magnet motor, and automatically corrects a parameter related to the limit value of the power.

10. The power conversion device according to any one of claims 2 to 4, further comprising:

    a power conversion unit in which a parameter related to the limit value of the power or a parameter related to a current in the permanent magnet motor is set, wherein
    the parameter set in the power conversion unit is set or changed via a digital operator, a personal computer, a tablet, or a smartphone.

11. The power conversion device according to claim 2, further comprising:

    a voltage detector that detects a direct current voltage of the power converter, wherein
    the limit value of the power is corrected according to the direct current voltage detected by the voltage detector.

[FIG. 1]

EP 4 704 330 A1

[FIG. 2]

EP 4 704 330 A1

# [FIG. 3]

[FIG. 4]

SPEED DETECTION VALUE $\omega_{rc}$

POWER COMPUTATION VALUE P

$P_{max}^{*}$

F

$P_{max}^{*}$

(kW)

(r/min)

OVERCURRENT LEVEL VALUE

$i_{oc\_lvl}$

$i_{max}^{*}$

PRIMARY CURRENT DETECTION VALUE $i_c$

(A)

TIME (s)

[FIG. 5]

1

20

21 CURRENT DETECTOR
$i_{uc}, i_{vc}, i_{wc}$

22 ENCODER
$\theta$

23 SPEED AND VECTOR CURRENT COMPONENT CALCULATION UNIT
$i_{dcc}, i_{qcc} \quad \omega_{rcc}$

24 PRIMARY CURRENT DETECTION VALUE AND POWER COMPUTATION VALUE OBSERVATION UNIT
$i_{cc} \quad \hat{P_c}$

[FIG. 6]

EP 4 704 330 A1

[FIG. 7]

[FIG. 8]

[FIG. 9]

11b

11b_1 — CURRENT LIMIT VALUE

$i_d^*$, $i_q^*$

11b_2 — PRIMARY CURRENT COMPUTATION UNIT

11b_3 — POWER LIMIT VALUE

11b_4 — POWER COMPUTATION UNIT

$V_{dc}^{***}$, $V_{qc}^{**}$, $i_d^*$, $i_q^*$

$i_{max}^*$

$i_c$

$P_{max}^*$

$\hat{p}$

11b_5 — POWER/CURRENT CONTROL COMPUTATION UNIT

$\Delta\omega_r^*$

[FIG. 10]

EP 4 704 330 A1

[FIG. 11]

EP 4 704 330 A1

[FIG. 12]

EP 4 704 330 A1

[FIG. 13]

[FIG. 14]

[FIG. 15]

[FIG. 16]

[FIG. 17]

EP 4 704 330 A1

[FIG. 18]

EP 4 704 330 A1

## INTERNATIONAL SEARCH REPORT

| International application No. |
| --- |
| **PCT/JP2023/036163** |

| A. | CLASSIFICATION OF SUBJECT MATTER |
| --- | --- |

*H02P 21/12*(2016.01)i
FI:  H02P21/12

According to International Patent Classification (IPC) or to both national classification and IPC

| B. | FIELDS SEARCHED |
| --- | --- |

Minimum documentation searched (classification system followed by classification symbols)

H02P21/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2006-191721 A (YASKAWA ELECTRIC MFG. CO., LTD.) 20 July 2006 (2006-07-20) paragraphs [0011]-[0012], fig. 1-4 | 1-5, 7-10 |
| A | | 6, 11 |
| Y | WO 2010/013534 A1 (AISIN AW CO., LTD.) 04 February 2010 (2010-02-04) paragraphs [0029]-[0031], [0055]-[0077], fig. 1-6 | 1-5, 7-10 |
| A | | 6, 11 |
| Y | WO 2022/054357 A1 (HITACHI INDUSTRIAL EQUIPMENT SYSTEMS CO., LTD.) 17 March 2022 (2022-03-17) paragraphs [0065]-[0067], fig. 8 | 3, 5, 7-10 |
| Y | WO 2015/156003 A1 (HITACHI INDUSTRIAL EQUIPMENT SYSTEMS CO., LTD.) 15 October 2015 (2015-10-15) paragraphs [0014]-[0019], fig. 1 | 7 |
| Y | WO 2023/276181 A1 (HITACHI INDUSTRIAL EQUIPMENT SYSTEMS CO., LTD.) 05 January 2023 (2023-01-05) paragraphs [0010]-[0016], [0080]-[0090], fig. 1, 13-14 | 9-10 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 November 2023** | **21 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
|---|
| **PCT/JP2023/036163** |

### C.   DOCUMENTS CONSIDERED TO BE RELEVANT

| Category* | Citation of document, with indication, where appropriate, of the relevant passages | Relevant to claim No. |
|---|---|---|
| A | WO 2013/108356 A1 (MITSUBISHI ELECTRIC CORPORATION) 25 July 2013 (2013-07-25)<br>paragraphs [0016]-[0059], fig. 1 | 1-11 |

Form PCT/ISA/210 (second sheet) (January 2015)

**INTERNATIONAL SEARCH REPORT**
Information on patent family members

International application No.

**PCT/JP2023/036163**

| Patent document cited in search report | | | Publication date (day/month/year) | Patent family member(s) | Publication date (day/month/year) |
|---|---|---|---|---|---|
| JP | 2006-191721 | A | 20 July 2006 | (Family: none) | |
| WO | 2010/013534 | A1 | 04 February 2010 | US 2010/0026222 A1 paragraphs [0038]-[0041], [0075]-[0101], fig. 1-6 CN 101919157 A | |
| WO | 2022/054357 | A1 | 17 March 2022 | KR 10-2023-0034392 A CN 116057827 A | |
| WO | 2015/156003 | A1 | 15 October 2015 | (Family: none) | |
| WO | 2023/276181 | A1 | 05 January 2023 | (Family: none) | |
| WO | 2013/108356 | A1 | 25 July 2013 | US 2015/0137727 A1 paragraphs [0022]-[0059], fig. 1 CN 104040876 A KR 10-2014-0106684 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006191721 A